# EUROPÄISCHE PATENTSCHRIFT

(11) **EP 0 680 421 B1**
(45) Veröffentlichungstag und Bekanntmachung des Hinweises auf die Patenterteilung: **02.04.1997**
(21) Anmeldenummer: 94904957.1
(22) Anmeldetag: 20.01.1994
(51) Int. Cl.: B60R 16/02

(54) **Datenbus-Vernetzungssystem in Kraftfahrzeugen**
Databus Network System in Automobiles
Système de liaison de données à bus d' une automobile

(30) Priorität: 26.01.1993 DE 4302032
(43) Veröffentlichungstag der Anmeldung: 08.11.1995
(73) Patentinhaber: Marquardt GmbH, 78604 Rietheim-Weilheim (DE)
(72) Erfinder: MARQUARDT, Jakob, D-78604 Rietheim-Weilheim (DE)
(74) Vertreter: Patentanwälte Eisele, Otten & Roth
(86) Internationale Anmeldenummer: DE9400053
(87) Internationale Veröffentlichungsnummer: WO9416921

(56) Entgegenhaltungen:
- EP-A- 0 051 849
- EP-A- 0 281 376
- EP-A- 0 289 271
- EP-A- 0 388 107
- EP-A- 0 491 095
- EP-A- 0 504 549
- DE-A- 3 644 802
- DE-A- 4 028 623
- JP-A-59 036 495
- US-A- 5 015 056
- INSTITUT OF MECHANICAL ENGINEERS, 1985 Seiten 227 - 230 ED VAN VELDHUIZEN 'PROPOSAL FOR AN AUTOMOTIVE MULTIPLEX WIRING SYSTEM'

## Beschreibung

Die Erfindung betrifft ein Schalt- oder Steuergerät nach dem Oberbegriff des Anspruchs 1.

Auf allen Gebieten der modernen Technik findet ein Zunehmender Einsatz der Elektronik statt. Dies gilt insbesondere auch für die modernen Automobiltechnik mit einer stetigen Zunahme elektrischer Komponenten, Motoren und Aggregaten sowie elektronischer Systeme, die eine immer umfangreichere Verdrahtung erfordern. Allein im Bereich des Armaturenbretts eines modernen Kraftfahrzeuges sind oft mehr als 100 Kabel und Steckverbindungen zum Anschluß von Instrumenten und Bedienelementen unterzubringen. Gleiches gilt für die modernen Fahrzeug-Sicherheitssysteme wie z.B. Bremsüberwachung, Antiblockiersystem, Antriebsschlupfregelung usw. Auch das Antriebssystem mit der elektronischen Motor- und Getriebesteuerung erfordert einen hohen elektronischen Aufwand mit einer aufwendigen Sensorik, die verdrahtet werden muß. Schließlich erfordert die Verdrahtung des Karosseriesystems mit Leuchten, Türsicherungen, Heizung- und Klimaanlagen, Gurt- und Sitzverstellungen eine aufwendige Steuerungsmimik mit entsprechend umfangreicher Verdrahtung. Eine solche konventionelle Verdrahtung hat damit einen kaum noch beherrschbaren Umfang erreicht.

Um hier Abhilfe zu schaffen, ist es im Fahrzeugbau in jüngster Zeit bekannt geworden, eine Vernetzung von elektronischen Steuergeräten mittels eines seriellen Datenbuses mit der Bezeichnung CAN (Controller Area Network) zu realisieren.

Mittels einer solchen seriellen Datenübertragung mit Bussystem können beliebig viele elektronische Steuersysteme oder Steuergeräte im Kraftfahrzeug über eine gemeinsame Busleitung miteinander verknüpft (vernetzt) werden und in einen Datenaustausch treten.

Solche Steuergeräte sind beispielsweise die elektronische Motor- und Getriebesteuerung, eine Fahrwerksregelung, eine elektronische Motorleistungssteuerung usw.. Gleichermaßen heranzuziehen sind Steuergeräte für die Sicherheitseinrichtungen, nämlich ein Antiblockiersystem, eine Antriebsschlupfregelung usw.. Auch der Bereich des Karosseriesystems enthält eine Vielzahl von Einzelsteuerungen für Türen, Gurte, Heizung, Klima- oder Sitzverstellung. Auch hierfür kann ein gemeinsamer Bordcomputer als Steuerungsgerät vorgesehen sein.

Das bekannte serielle Datenübertragungssystem "CAN" bietet demnach ein Kommunikationssystem zwischen den einzelnen elektronischen Bauelementen bzw. Steuergeräten über einen gemeinsamen Datenbus. Hierdurch wird der bisherige Datenaustausch zwischen mehreren elektronischen Steuergeräten über konventionelle Schnittstellen mit einer Vielzahl von separaten Leitungen auf eine einzige oder nur sehr wenige Busleitungen, den Datenbus reduziert. Ein solcher Datenbus koppelt die Rechner in den Steuergeräten des Motor- und Antriebsmanagements über eine gemeinsame Datenleitung, so daß diese miteinander kommunizieren können. Hierdurch ergibt sich eine hohe Einsparung von herkömmlichen Verdrahtungssystemen und völlig neue Möglichkeiten der Datenauswertung.

Aus der Literaturstelle: Müller, Karl: "Offenes Buskonzept für Schalter, Sensoren, Aktoren" der DE-Zeitung Elektronik 1992, Heft 22, Seiten 82-87, ist ein solches Bussystem insbesondere für den Kfz-Bereich bekannt geworden. Ergänzend zu einer Verbindung der wesentlichen Steuergeräte über eine gemeinsame Hauptbusleitung schlägt diese Literaturstelle eine Unterbus-Struktur vor, die offene Schnittstellen zu einem übergeordneten Feldbussystem oder Steuerungen ermöglicht. Insbesondere soll eine Ankopplung von binärorganisierten Sensoren, Aktoren und mechanischen Schaltern (Slaves) in einer Unterbus-Struktur erfolgen, die eine autonome Steuerung durch "Master-Baugruppen" und offene Schnittstellen für das übergeordnete Hauptbussystem erhält. Hierdurch wird ein einzelner elektronischer Schalter mit einer integrierten Sensor-/Buslogik konzipiert, dessen Sensorsignal über den Schalterbus an das zentrale Bussystem oder unmittelbar an ein Steuergerät weitergegeben wird. Hierdurch wird der Einzelschalter in beliebiger Bauart zu einem "Busschalter" konzipiert.

Die zuvor erwähnten bekannten Lösungsvorschläge haben zum einen den Nachteil, daß entweder eine sehr aufwendige Steuergeräte-Vernetzung über eine gemeinsame Hauptbusleitung stattfindet (z. B. CAN-Datenbus) oder aber die einzelnen Schaltelemente oder Sensoren "busfähig" gemacht werden und in einer Unterbus-Struktur verwaltet werden.

Sowohl aus der EP-A-0 289 271, deren Merkmale dem Oberbegriff des Anspruchs 1 entsprechen, als auch aus der JP-A-59-36 495 sind Datenbus-Vernetzungssysteme bekannt geworden, bei denen zum einen eine oder mehrere Einzelschalter in einem Busknotenpunkt zu busfähigen Signalen verarbeitet und auf einen Datenbus übertragen werden. Weiterhin können in diesen Systemen auch Einzelschalter jeweils zu einem busfähigen Signal verarbeitet und dann dem Datenbus zugeführt werden. Nachteilig an diesen Systemen ist die fehlende Integration von normalen Schaltersignalen oder Schaltimpulsen im Bussystem, die allenfalls über einen busfähigen Anpassungsvorgang verarbeitet werden können.

Der Erfindung liegt die Aufgabe zugrunde, ein Schalt- oder Steuergerät zu schaffen, das busfähig ist und eine Vielzahl von Schaltvorgängen umfaßt und welches flexibel einsetzbar ist. Insbesondere soll ein solches Gerät auch solche Schaltvorgänge erfassen können, die keinen gesonderten technischen Aufwand erlauben, um einen eigenen busfähigen Schalter hiermit zu integrieren.

Diese Aufgabe wird ausgehend von einem Schalt- oder Steuergerät der einleitend bezeichneten Art durch die kennzeichnenden Merkmale des Anspruchs 1 gelöst.

In den Unteransprüchen sind vorteilhafte und zweckmäßige Weiterbildungen des erfindungsgemäßen Prinzips angegeben.

Der Erfindung liegt der Kerngedanke zugrunde, daß es sich für einen einzelnen externen Schalter oder kleinere Schaltergruppen nicht zwingend lohnt, diese mit einem Bus-IC zur direkten Ankoppelung an eine Busvernetzung auszustatten. Um dies zu erreichen, wird erfindungsgemäß ein Einzelschalter verwendet, der von seiner speziellen Lage zum nächstmöglichen Busknotenpunkt geführt wird. Dabei erfolgt das Schaltsystem in besonders idealer Weise durch einen optischen Lichtschalter, der an beliebiger Stelle installiert und betätigt werden kann. Ein Schließen des optischen Lichtschalters bewirkt über zugehörige Lichtleiterkabel einen Schaltvorgang im nächstliegenden Busknoten und damit die Erzeugung eines busfähigen Signals.

Die Erfindung hat gegenüber den bekannten Systemen den Vorteil, daß ein sehr einfaches und insbesondere flexibles Ankopplungssystem zu einem Netzwerk erfolgt. Dabei können eine Vielzahl von Einzelschaltern auch in herkömmlicher Bauweise verwendet werden. Die Ankopplung solcher herkömmlicher Schalter erfolgt an den nächstliegenden Busknotenpunkt, so daß das Schaltersignal des Einzelschalters auf kürzestem Weg ebenfalls in das Busnetzwerk integrierbar ist. Hierdurch werden lange elektrische Leitungen in herkömmlicher Bauweise eingespart. Weiterhin werden die Vorteile der Busvernetzung in vollem Umfang genutzt.

In besonders vorteilhafter Ausgestaltung der Erfindung werden als Schalter zur Ankopplung an den Busknoten spezielle Lichtleiterschalter verwendet, wie sie beispielsweise aus der DE-A-36 44 802 bekannt sind. Dabei befindet sich die Lichtquelle sowie der Lichtempfänger grundsätzlich im Busknotenpunkt selbst, so daß lediglich ein Lichtleiter an die entsprechende Stelle geführt wird, wo der Schaltvorgang durch Auftrennung der Lichtleitung durchgeführt werden soll. Hierdurch ist eine besonders kleine Bauweise mit hoher Zuverlässigkeit möglich.

Es können jedoch auch andere mechanische, magnetische, induktive oder sonstige optische Schalter bzw. Sensoren als separate Schaltorgane vorgesehen sein, die an dem Busknotenpunkt angeschlossen werden.

Der Busknotenpunkt selbst ist beispielsweise als Zündanlaßschalter oder als Lenkstockschalter ausgebildet, mit einer Vielzahl von internen Schaltern, die auf einen Bus-Baustein einwirken. Das Schaltgerät kann auch eine busfähige Verdrahtung des Kombi-Instrumentes mit verschiedenen Schaltern wie diverse Lichtschalter, Schalter für die Heckscheibenheizung usw. sein.

Schließlich kann der externe Schalter auch unmittelbar auf ein busfähiges Steuergerät einwirken.

Weitere Einzelheiten der Erfindung sind in der Zeichnung anhand von Ausführungsbeispielen sowie in der nachfolgenden Beschreibung von Ausführungsbeispielen dargestellt.

Es zeigen
- Fig. 1: ein einfaches busfähiges Schaltgerät mit einem zusätzlichen Schalteranschluß,
- Fig. 2: mehrere parallel geschaltete, mit einer Busleitung verbundene Schaltgeräte und/oder Steuergeräte mit zusätzlich hiermit verbundenen Einzelschaltern.

Das erfindungsgemäße Busankopplungssystem mit Busknotenpunkt insbesondere zur Verwendnung in Kraftfahrzeugen wird in einer bekannten Steuergeräte-Vernetzung mit vorhandenen Busknotenpunkten verwendet. Hierzu wird auch die Literaturstelle Philips: CAN-Produkte für universelle Anwendungsfelder, Januar 1992 verwiesen. Auf den Seiten 8 und 9 dieser Literaturstelle ist beispielsweise das CAN-Datenkommunikationssystem im Kraftfahrzeug beschrieben, welches Steuergeräte wie beispielsweise das ABS-System, die Getriebesteuerung, die Motorelektronik usw. über einen gemeinsamen Hauptdatenbus miteinander verbindet. Gleichermaßen werden über einen solchen Datenbus auch elektronische Karosseriesysteme verbunden, die die Vielzahl der Schalter in Türen, für die Heizung- oder Klimaregelung, für die Sitzverstellung, für die Gurtsicherung usw. erfassen und in einem Steuergerät auswerten.

An einem solchen Bussystem werden gemäß dem vorgeschlagenen System auch komplette Steuereinheiten mit Controller und Bedienelementen für die verschiedensten Einzelaggregate mit mehreren zusammengefaßten Schaltern angeschlossen, wie dies beispielsweise ein Zündanlaßschalter, ein Lenkstockschalter oder eine Kombigerät-Instrumentierung mit Schaltern darstellt.

Hierzu verwiesen wird auch auf die eingangs genannte Literaturstelle aus dem Sonderdruck aus Elektronik, Heft 22/1992.

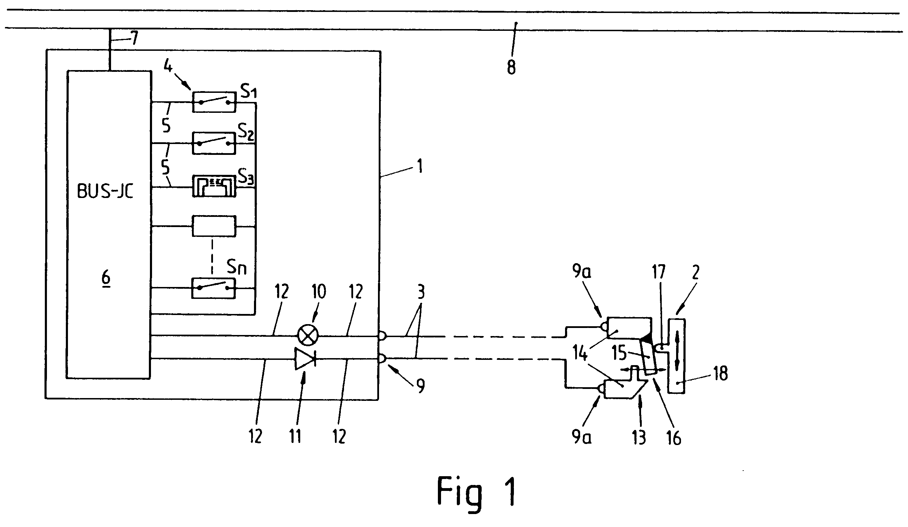

Erfindungsgemäß werden gemäß der Darstellung in Fig. 1 in einem solchen Vernetzungssystem einzelne busfähige Schaltgeräte 1 so ausgebildet, daß diese mit einem herkömmlichen, nicht busfähigen externen Schalter 2 über eine externe Leitung 3 verbunden werden können. Dieses Schaltgerät 1 kann beispielsweise ein Zündanlaßschalter, ein Lenkstockschalter, ein Kombiinstrument o.dgl. in einem Kraftfahrzeug sein, in welchem eine Vielzahl von Einzelschaltern 4 zusammengefaßt sind, wobei die Einzelschalter 4 als S₁, S₂ bis Sₙ bezeichnet sind. Diese Einzelschalter innerhalb des Schaltgeräts 1 können verschiedener Bauart sein, d.h. sie können als mechanische, magnetische, induktive, optische oder sonstige Schalter oder Sensoren ausgebildet sein. Alle Einzelschalter 4 im Schaltgerät 1 sind über eine Platinenverdrahtung 5 mit einem Bus-IC 6 verbunden, welcher die Schaltsignale der Einzelschalter 4 zu busfähigen Signalen umwandelt. Diese Signale werden dann über eine Ausgangsleitung 7 auf einen Haupt-Datenbus 8 in einem Bus-Vernetzungssystem geleitet. Die eingangs erwähnten bekannten Vorschläge sehen derartige Schaltgeräte 1 für alle wichtigen Schaltergruppenanordnungen vor. Übrige Schalter werden konventionell verdrahtet (Philips). Gemäß der weiterhin genannten Literaturstelle "Elektronik" können auch einzelne Schalter als busfähige Einzelschalter mit einem eigenen Bus-IC ausgestaltet sein.

Die vorliegende Erfindung sieht demgegenüber als weiterbildende Maßnahme vor, daß der herkömmliche externe Schalter 2 an beliebiger Stelle im Kraftfahrzeug nicht mit einem aufwendigen Bus-IC ausgestattet ist. Vielmehr wird gemäß der Darstellung in Fig. 1 ein solcher Schalter 2 über eine Verbindungsleitung 3 an den möglichst nächstliegenden Busknoten über separate Anschlüsse verbunden und innerhalb des Schaltgeräts 1 zu einem busfähigen Signal verarbeitet. Beispielsweise kann ein Bremslichtschalter an einem Bremspedal in herkömmlicher Bauart ausgebildet sein, welcher über eine Verbindungsleitung zu dem nächstliegenden Busknoten, z.B. dem Zündanlaßschalter geführt ist. Dieser busfähige Zündanlaßschalter verarbeitet dann das Schaltsignal des Einzelschalters zu einem busfähigen Signal.

Mit dieser Bauweise kann eine erhebliche Gewichtseinsparung und eine hohe Zuverlässigkeit erreicht werden, da trotz konventioneller Schalterbauweise nur kurze Verbindungsleitungen zum nächstliegenden Busknoten erforderlich sind. Durch die Elektronik können die Schalter diagnosefähig ausgebildet sein.

Gemäß der Darstellung in Fig. 1 kann ein solcher Busknotenpunkt des Schaltgerätes 1 auf vorteilhafte Weise auch zur Ansteuerung spezieller Lichtleiter-Schalter 2 verwendet werden. Hierfür ist innerhalb des Busknotenpunktes bzw. des Schaltgerätes 1 ein optischer Sender 10 (LED) und ein Empfänger als Fotodiode 11 vorgesehen. Über entsprechende Lichtleiterkabel 12 werden die ebenfalls als Lichtleiterkabel ausgebildeten Leitungen 3 an den Anschlüssen 9 angeschlossen und führen über eine beliebige Wegstrecke zum Einzelschalter 2. Dieser Einzelschalter 2 ist als Lichtleiterschalter 13 ausgebildet, wobei das Licht über eine U-förmige Brücke 14 mit einem oberen Verbindungsschenkel 15 geführt ist. Der obere Verbindungsschenkel 15 ist als auftrennbares bzw. verschiebbares Glied mit einer Trennstelle 16 ausgebildet, deren Betätigung über einen Schaltnocken 17 eines Schiebeelements 18 erfolgt. Anstelle des dargestellten Schiebeelements kann selbstverständlich auch ein Druckelement oder ein sonstiges Schaltglied Verwendung finden. Beispielsweise sei auf den elektrisch steuerbaren Glasfaserschalter gemäß DE-A-36 44 802 verwiesen.

Über die beliebig langen optischen Verbindungsleitungen 3 kann dann das Schaltsignal des Lichtleiterschalters 13 zum Schaltgerät 1 geführt werden.

Die Anschlüsse 9, 9a der Lichtleiter 3 an das Schaltgerät 1 oder den Schalter 2 können durch Kleben oder Ultraschall-Schweißen erfolgen, so daß keine separaten Steckkontakte mit entsprechenden Fehlerquellen vorhanden sind. Im inneren des Schaltgeräts 1 sind die Anschlußleitungen 12 mit dem Bus-IC 6 verbunden, so daß das Schaltsignal des Lichtleiterschalters 13 in ein busfähiges Signal für die Hauptbusleitung 8 umgeformt wird.

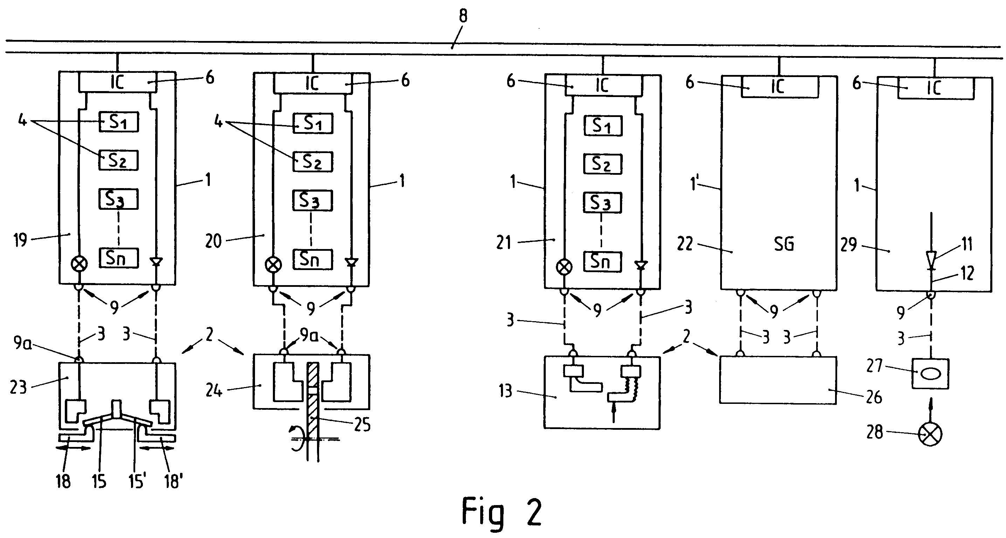

Das Ausführungsbeispiel nach Fig. 2 zeigt ein erweitertes Ausführungsbeispiel nach dem gleichen Grundprinzip wie in Fig. 1.

An einem gemeinsamen Haupt-Datenbus 8 sind mehrere Einzelschaltgeräte 1 oder auch ein Steuergerät (SG) 1' parallel angeschlossen. So kann beispielsweise ein vorhandener Zündanlaßschalter 19, ein Lenkstockschalter 20, ein Kombiinstrument 21 sowie eine Vielzahl von Steuergeräten 22 wie Motorelektronik, ABS-System, Klimageräte usw. an dem Hauptdatenbus 8 angeschlossen sein. Jedes dieser Einzelschaltgeräte 19, 20, 21 besitzt wiederum eine Vielzahl von Einzelschaltern 4, die mit S₁ bis Sₙ bezeichnet sind.

Dies können beim Zündanlaßschalter 19 die Einzelschalter zur Betätigung der Zündung, des Anlaßerrelais usw. sein. Der Lenkstockschalter 20 besitzt ebenso eine Vielzahl von Einzelschaltern für die Scheibenwaschanlage, für die Lichthupe, für den Blinker usw..

Jedem der Schaltgeräte 19 bis 21 bzw. dem Steuergerät 22 können wiederum externe Einzelschalter 2 zugeordnet sein, die über Leitungen 3 und Anschlüssen 9 mit dem jeweiligen Schaltgerät bzw. Steuergerät verbunden sind. Dabei können die externen Einzelschalter 2 die verschiedensten Ausführungsformen aufweisen. So ist der Einzelschalter 23 der beispielsweise zum Zündanlaßschalter 19 führt als doppelter Lichtleiterschalter 23 ausgebildet, welcher über eine doppelte Brücke 15, 15' von zwei getrennten Schiebeelementen 18, 18' betätigt wird. Der übrige Aufbau entspricht beispielsweise dem Lichtleiterschalter 13 in Fig. 1. Hierdurch kann eine bestimmte Schaltfolge eingehalten werden.

Der mit dem Lenkstockschalter 20 beispielhaft verbundene Einzelschalter 24 ist ebenfalls als Lichtleiterschalter ausgebildet, wobei der Schaltvorgang jedoch über eine drehbare Lochblende 25 ausgeführt wird. Mittels der Lochblende kann jegliche Information über eine Drehzahl oder Winkelstellung ausgewertet werden. Optische Blenden oder Winkelgeber sind beispielsweise aus der DE-A-40 28 623 bekannt.

Der mit dem Kombiinstrument 21 verbundene Einzelschalter 2 kann als Lichtleiterschalter 13 gemäß der Beschreibung in Fig. 1 ausgebildet sein (siehe DE-A-36 44 802).

Der mit dem Steuergerät 22 verbundene Einzelschalter 26 kann beliebiger Bauart und insbesondere ebenfalls ein Lichtleiterschalter sein, dessen Schaltsignal im Steuergerät 22 zu einem busfähigen Schaltsignal umgewandelt wird.

In Weiterbildung der Erfindung kann gemäß der Darstellung in Fig. 2 ein weiteres Einzelschaltgerät 1, 29 wie zuvor beschrieben, mit einer Empfangsdiode 11 ausgestattet sein, die über die Leitung 12 zu einem Anschluß 9 am Schaltgerät 1 führt. Über die externe optische Leitung 3 wird ein Lichtempfänger 27 am Anschluß 9a angeschlossen, der drahtlos von einem Lichtimpulsgeber 28, z.B. einem Infrarotsender oder dgl. ein Schaltsignal erhält, welches im Einzelschaltgerät 29 zu einem busfähigen Signal verarbeitet wird.

Die Erfindung ist nicht auf die dargestellten und beschriebenen Ausführungsbeispiele beschränkt, Sie umfaßt auch vielmehr alle Abwandlungen im Rahmen des durch die Patentansprüche definierten Schutzumfangs.

## Patentansprüche

1. Schalt- oder Steuergerät zur Verarbeitung einer Vielzahl von Signalen und insbesondere Schaltersignalen von mehreren im Schalt- oder Steuergerät (1, 19 bis 21, 1', 22) angeordneten Einzelschaltern (4), wobei das Schalt- oder Steuergerät (1, 19 bis 21, 1', 22) als Busknotenpunkt zum Anschluß an einen Datenbus (8) in einem Datenbus-Vernetzungssystem eines kraftfahrzeugs ausgebildet ist und einen Bus-IC (6) zur Verarbeitung der Signale und Schaltersignale in Bussignale enthält, dadurch gekennzeichnet, daß die Einzelschalter (4) im Schalt- bzw. Steuergerät (1, 19 bis 21, 1', 22) über eine Platinenverdrahtung (5) mit dem Bus-IC (6) verbunden sind, daß das Schalt- oder Steuergerät (1, 19 bis 21, 1', 22) wenigstens einen zusätzlichen Anschluß (9) für wenigstens einen externen, nicht busfähigen Schalter (2, 13, 23, 24, 26) und/oder Impulsgeber (27, 28) aufweist, wobei der externe Schalter (2, 13, 23, 24, 26) über eine Verbindungsleitung (3) mit dem Anschluß (9) des Schalt- oder Steuergeräts (1, 19 bis 21, 1', 22) verbunden ist, und daß der Anschluß (9) im Inneren des Schalt- oder Steuergeräts (1, 19 bis 21, 1', 22) über Anschlußleitungen (12) mit dem Bus-IC (6) derart verbunden ist, daß das Schaltsignal des externen Schalters (2, 13, 23, 24, 26) und/oder Impulsgebers (27, 28) im Bus-IC (6) zu einem busfähigen Signal verarbeitbar ist.

2. Schalt- oder Steuergerät nach Anspruch 1, dadurch gekennzeichnet, daß der externe Schalter (2) als mechanischer, magnetischer, induktiver oder optischer Schalter bzw. Sensor ausgebildet ist, dessen Schaltsignal über Anschlußleitungen (3) zum Busknotenpunkt des Schaltgeräts (1) bzw. Steuergeräts (1') geführt ist.

3. Schalt- oder Steuergerät nach Anspruch 1 oder 2, dadurch gekennzeichnet, daß der externe Schalter (2) als Lichtleiterschalter (13, 23, 24, 26) ausgebildet ist, der über Lichtleiter (3) mit dem Schaltgerät (1) bzw. Steuergerät (1') verbunden ist.

4. Schalt- oder Steuergerät nach einem der vorhergehenden Ansprüche 1 bis 3, dadurch gekennzeichnet, daß die Einzelschalter (4) (Schalter Sl bis Sn) in dem Schalt- oder Steuergerät (1, 19 bis 21; 1', 22) als mechanische, magnetische, induktive oder optische Schalter bzw. Sensoren ausgebildet sind.

5. Schalt- oder Steuergerät nach einem der vorhergehenden Ansprüche, dadurch gekennzeichnet, daß das Schaltgerät (1) wenigstens einen optischen Einzelschalter S₃ aufweist, wobei eine gemeinsame Lichtquelle für mehrere interne optische Sensoren und/oder für den externen Lichtleiterschalter (13) vorgesehen ist.

6. Schalt- oder Steuergerät nach einem der vorhergehenden Ansprüche, dadurch gekennzeichnet, daß mehrere Schaltgeräte (1, 19 bis 21) bzw. Steuergeräte (1', 22) an einen gemeinsamen Datenbus (8) angeschlossen sind, der zu einem Busmaster oder zu einem zentralen Hauptsteuergerät führt.

7. Schalt- oder Steuergerät nach einem der vorhergehenden Ansprüche, dadurch gekennzeichnet, daß das Schaltgerät oder die die Schaltgerät (1, 19 bis 21) in einem Kraftfahrzeug als Zündanlaßschalter, Lenkstockschalter, Kombiinstrument, Karosseriesystemgerät oder dergleichen und das Steuergerät oder die Steuergeräte (1', 22) als elektronisches Steuersystem für das Antriebssystem, das Sicherheitssystem, das interne Karosseriesystem oder dergleichen ausgebildet ist beziehungsweise sind.

8. Schalt- oder Steuergerät nach einem der vorhergehenden Ansprüche, dadurch gekennzeichnet, daß das Schaltgerät (1, 29) mit einer Empfangsdiode oder dergleichen (11) ausgestattet ist, die ein Lichtsignal eines externen Lichtempfängers (27) empfängt, der von einem Lichtimpulsgeber (28) drahtlos ein Schaltsignal erhält.

## Claims

1. Switching or controlling apparatus for processing a plurality of signals, and in particular switch signals of several individual switches (4) disposed in the switching or controlling apparatus (1, 19 to 21, 1', 22), the switching or controlling apparatus (1, 19 to 21, 1', 22) being designed as a bus node for connection to a data bus (8) in a data bus network system of a motor vehicle, and comprises a bus-IC (6) for converting the signals and switch signals into bus signals, characterised in that the individual switches (4) are connected in the switching or controlling apparatus (1, 19 to 21, 1', 22) via board circuitry (5) to the bus-IC (6), in that the switching or controlling apparatus (1, 19 to 21, 1', 22) has at least one additional connector (9) for at least one external, non-bus-adaptable switch (2, 13, 23, 24, 26) and/or pulse generator (27, 28), the external switch (2, 13, 23, 24, 26) being connected via a connection line (3) to the connector (9) of the switching or controlling apparatus (1, 19 to 21, 1,', 22), and in that the connector (9) is connected in the interior of the switching or controlling apparatus (1, 19 to 21, 1', 22) via connection lines (12) to the bus-IC (6) in such a way that the switch signal of the external switch (2, 13, 23, 24, 26) and/or pulse generator (27, 28) can be converted in the bus-IC (6) into a bus-adapted signal.

2. Switching or controlling apparatus according to claim 1, characterised in that the external switch (2) is designed as a mechanical, magnetic, inductive or optical switch or sensor, the switch signal of which is passed via connection lines (3) to the bus node of the switching (1) or controlling apparatus (1').

3. Switching or controlling apparatus according to claim 1 or 2, characterised in that the external switch (2) is designed as a fibre optic light guide switch (13, 23, 24, 26) which is connected via fibre optic light guides (3) to the switching apparatus (1) or controlling apparatus (1').

4. Switching or controlling apparatus according to one of the preceding claims 1 to 3, characterised in that the individual switches (4) (switches Sl to Sn) in the switching or controlling apparatus (1, 19 to 21; 1', 22) are designed as mechanical, magnetic, inductive or optical switches or sensors.

5. Switching or controlling apparatus according to one of the preceding claims, characterised in that the switching apparatus (1) comprises at least one optical individual switch S₃, a common light-source being provided for several internal optical sensors and/or for the external fibre optic light guide switch (13).

6. Switching or controlling apparatus according to one of the preceding claims, characterised in that several switching apparatuses (1, 19 to 21) or controlling apparatuses (1'; 22) are connected to a common data bus (8), which leads to a bus-master or to a central main control device.

7. Switching or controlling apparatus according to one of the preceding claims, characterised in that the switching apparatus or switching apparatuses (1, 19 to 21) is or are designed in a motor vehicle as an ignition starter switch, steering column switch, combinational instrument, body system apparatus or the like, and the controlling apparatus or controlling apparatuses (1', 22) is or are designed as an electronic control system for the drive system, the safety system, the internal body system or the like.

8. Switching or controlling apparatus according to one of the preceding claims, characterised in that the switching apparatus (1, 29) is fitted with a receiver diode (11) or the like, which receives a light signal from an external light-receiver (27) which receives a switching signal in a wireless fashion from a light pulse generator (28).

## Revendications

1. Dispositif de commutation ou de commande pour la transformation d'une pluralité de signaux et en particulier des signaux de commutation de plusieurs interrupteurs individuels (4) agencés dans le dispositif de commutation ou de commande (1,19 à 21,1',22), le dispositif de commutation ou de commande (1,19 à 21,1',22) étant réalisé sous forme de noeud à bus pour le raccordement à un bus de données (8) dans un système de mise en réseau de bus de données d'un véhicule automobile et comportant un bus à circuit intégré (6) pour la transformation des signaux et des signaux de commutation dans des signaux de bus,
caractérisé en ce que les interrupteurs individuels (4) sont reliés dans le dispositif de commutation ou de commande (1,19 à 21,1',22) par l'intermédiaire d'un câblage de platine (5), au bus à circuit intégré (6), en ce que le dispositif de commutation ou de commande (1,19 à 21,1',22) comporte au moins un raccordement supplémentaire (9) pour au moins un interrupteur externe (2,13,23,24,26) sans bus et/ou un générateur d'impulsions (27,28), l'interrupteur externe (2,13,23,24,26) étant relié par l'intermédiaire d'une liaison (3) au raccordement (9) du dispositif de commutation ou de commande (1,19 à 21,1',22), et en ce que le raccordement (9) est relié à l'intérieur du dispositif de commutation ou de commande (1,19 à 21,1',22), par l'intermédiaire de liaisons de raccordement (12), au bus à circuit intégré (6) de sorte que le signal de commutation de l'interrupteur externe (2,13,23,24,26) et/ou du générateur d'impulsions (27,28) peut être transformé dans le bus à circuit intégré (6) en un signal à bus.

2. Dispositif de commutation ou de commande selon la revendication 1,
caractérisé en ce que l'interrupteur externe (2) est réalisé sous forme d'un interrupteur ou capteur mécanique, magnétique, inductif ou optique, dont le signal de commutation est guidé par l'intermédiaire de liaisons de raccordement (3) au noeud à bus du dispositif de commutation (1) ou du dispositif de commande (1').

3. Dispositif de commutation ou de commande selon l'une des revendications 1 ou 2,
caractérisé en ce que l'interrupteur externe (2) est réalisé sous forme d'un interrupteur à guide de lumière (13,23,24, 26), qui est relié par l'intermédiaire d'un guide de lumière (3) au dispositif de commutation (1) ou au dispositif de commande (1').

4. Dispositif de commutation ou de commande selon l'une des revendications précédentes 1 à 3,
caractérisé en ce que les interrupteurs individuels (4) (interrupteur S1 à Sn) sont réalisés dans le dispositif de commutation ou de commande (1,19 à 21;1',22) sous forme d'interrupteurs ou de capteurs mécaniques, magnétiques, inductifs ou optiques.

5. Dispositif de commutation ou de commande selon l'une des revendications précédentes,
caractérisé en ce que le dispositif de commutation (1) comporte au moins un interrupteur optique individuel S₃, une source de lumière commune étant prévue pour plusieurs capteurs optiques internes et/ou pour l'interrupteur à guide de lumière externe (13).

6. Dispositif de commutation ou de commande selon l'une des revendications précédentes,
caractérisé en ce que plusieurs dispositifs de commutation (1,19 à 21) ou dispositifs de commande (1',22) sont raccordés à un bus de données commun (8) qui guide vers un maître à bus ou vers un dispositif de commande principal central.

7. Dispositif de commutation ou de commande selon l'une des revendications précédentes,
caractérisé en ce que le dispositif de commutation ou les dispositifs de commutation (1,19 à 21) sont réalisés dans un véhicule automobile sous forme d'un interrupteur d'allumage, d'un interrupteur d'arbre de direction, d'un instrument de break, d'un dispositif du système de carrosserie, ou analogue et le dispositif de commande ou les dispositifs de commande (1',22) sont réalisés sous forme d'un système de commande électronique pour le système d'entraînement, le système de sécurité, le système de carrosserie interne, ou analogue.

8. Dispositif de commutation ou de commande selon l'une des revendications précédentes,
caractérisé en ce que le dispositif de commutation (1,29) est équipé d'une diode de réception (11), ou analogue, qui reçoit un signal lumineux d'un récepteur de lumière externe (27) qui reçoit sans fil un signal de commutation d'un générateur d'impulsion lumineuse (28).
